# EUROPÄISCHE PATENTSCHRIFT

(11) **EP 1 487 704 B1**
(45) Veröffentlichungstag und Bekanntmachung des Hinweises auf die Patenterteilung: **26.10.2005**
(21) Anmeldenummer: 02793123.7
(22) Anmeldetag: 31.12.2002
(51) Int. Cl.: B65D 5/74, B31B 1/84

(54) **WIEDERVERSCHLIESSBARES AUSGIESSELEMENT**
RECLOSABLE POURING ELEMENT
ELEMENT VERSEUR REFERMABLE

(30) Priorität: 22.03.2002 DE 10213030
(43) Veröffentlichungstag der Anmeldung: 22.12.2004
(73) Patentinhaber: SIG Combibloc Systems GmbH, 52441 Linnich (DE)
(72) Erfinder: BERGER, Jörg, 52428 Jülich (DE); DAMMERS, Matthias, 52477 Alsdorf (DE); JANSEN, Heinz, 53940 Hellenthal (DE); SPELTEN, Franz-Willi, 41844 Wegberg (DE)
(74) Vertreter: Cohausz & Florack
(86) Internationale Anmeldenummer: PCT/EP2002/014810
(87) Internationale Veröffentlichungsnummer: WO 2003/080454

(56) Entgegenhaltungen:
- EP-A- 0 340 339
- US-A- 4 948 015
- PATENT ABSTRACTS OF JAPAN vol. 1996, no. 12, 26. Dezember 1996 (1996-12-26) -& JP 08 198253 A (SHIKOKU KAKOKI CO LTD), 6. August 1996 (1996-08-06)

## Beschreibung

Die Erfindung betrifft ein wiederverschließbares Ausgießelement zum Öffnen und Wiederverschließen von Packungen, insbesondere quaderförmigen Mehrschichtverbundpackungen, mit einem einen umlaufenden Flansch aufweisenden Grundkörper und einem mit diesem gelenkig verbundenen Deckel sowie ein Verfahren zu seiner Herstellung und eine mit einem solchen Ausgießelement versehene Packung.

Als Mehrschichtverbundpackungen ausgebildete Getränkepackungen sind in vielfacher Ausfertigung bekannt, beispielsweise als Flachgiebelverbundpackungen. Sie finden vornehmlich auf dem Gebiet der Flüssigkeitsverpackung im Zusammenhang mit Kalt-, Kalt-Steril-, Heiß- und aseptischer Füllung Verwendung.

Um die Handhabung solcher Verbundpackungen zu verbessern und insbesondere deren Wiederverschließbarkeit zu erreichen, ist man mehr und mehr dazu übergegangen, die Verbundpackungen mit wiederverschließbaren Ausgießelementen zu versehen. Diese Ausgießelemente können ein- oder mehrteilig ausgeführt sein und weisen in der Regel ein Öffnungselement sowie einen Deckel auf. Heute sind nahezu ausschließlich solche Packungen mit wiederverschließbaren Ausgießelementen marktüblich.

Aus der JP 08 198 253 A ist beispielsweise ein wiederverschließbares Ausgießelement flacher Bauweise bekannt. Dieses Ausgießelement besteht aus einem Deckel und einem Flansch, die miteinander über ein Gelenk verbunden sind, wobei Deckel- und Flanschunterseite in gleicher Ebene zueinander verlaufen, jedoch durch einen Spalt voneinander getrennt sind. Deckel- und Flanschunterseite werden direkt auf die Verpackungsaußenseite geklebt, die eine zum Spalt gerichtete Schwächungslinie aufweist. Im Bereich Spalt/Schwächungslinie ist die Barriereeigenschaft der Verpackung reduziert.

Aus der EP 0 580 593 B1 ist beispielsweise eine Mehrschichtverbundpackung bekannt, die mit einem Ausgießelement versehen ist, welches zum erstmaligen Öffnen der Packung dient und zu seiner Wiederverschließbarkeit mit einem entsprechenden Verschlusselement ausgestattet ist. Dort ist im Bereich der Kartonschicht und äußeren PE-Schicht des Verbundmaterials der Packung eine Einkerbung zur Schwächung des Giebelmaterials vorgesehen, in die zum Öffnen der Packung ein mit dem Ausgießelement einstückig verbundenes Öffnungselement in das Packungsmaterial hineingedrückt wird. Ferner sind auch Packungen bekannt, die mit Ausgießelementen mit Schraubverschlüssen versehen sind.

Manche Ausgießelemente weisen innerhalb des Grundkörpers eine über der Gießöffnung befindliche und dort fest aufgesiegelte Aufreißlasche auf, die zum erstmaligen Öffnen der Packung durch Abziehen vom Grundkörper entfernt werden muss (EP 0 750 564 B1). Dabei wird die innere PE-Schicht jedoch häufig nur unzureichend entfernt und darüber hinaus stellt die abgerissene Aufreißlasche ein separat zu entsorgendes Abfallprodukt dar.

Bei den zuvor erläuterten Ausgießelementen ist problematisch, dass zum zuverlässigen Öffnen der gesamten Gießöffnung das Mehrschichtverbundmaterial hinreichend geschwächt sein muss. Auf die Packung aufgeklebte Ausgießelemente sind über einer meist durch Perforation der äußeren Schichten des Mehrschichtverbundmaterials gebildeten Schwächungszone angeordnet; dies führt zwar zu einem bis zur tatsächlichen Öffnung anhaltenden Barriereverhalten des Verbundmaterials, setzt aber eine gewisse Mindestgröße (Bauhöhe) des Ausgießelements voraus, da beim Öffnungsvorgang ein Öffnungselement des Ausgießelements die verbleibenden Schichten zerstören muss. Ist das Ausgießelement hingegen über einem lediglich mit einer dünnen PE-Schicht übersiegelten Gießöffnung im Mehrschichtverbundmaterial angeordnet, wird der Öffnungsvorgang auch bei kleiner Bauhöhe erleichtert, doch eine solche Packung hat keine ausreichenden Barriereeigenschaften gegen Aromaverlust oder Beeinträchtigung durch Licht oder Sauerstoff.

Der Erfindung liegt daher die Aufgabe zugrunde, das eingangs genannte und zuvor näher beschriebene Ausgießelement so auszugestalten und weiterzubilden, dass die guten Barriereeigenschaften der damit versehenen Packung auch bei geringer Bauhöhe des Ausgießelements bis zum erstmaligen Öffnen der Packung erhalten bleiben. Darüber hinaus ist erwünscht, dass ein solches Ausgießelement ohne separates Wegwerfteil auskommen soll.

Gelöst wird diese Aufgabe dadurch, dass der Grundkörper im Bereich seiner Gießöffnung eine Platte aufweist, deren Kontur im wesentlichen der Kontur der Gießöffnung entspricht, die durch wenigstens einen Schlitz vom Flansch beabstandet angeordnet ist und deren Unterseite bündig mit der Unterseite des Flansches verläuft, dass der Deckel mit der Platte fest verbunden ist, so dass der Deckel gleichzeitig als Öffnungselement dient und dass sowohl der Grundkörper als auch die Platte eine sich parallel zur Flanschebene erstreckende, den Schlitz überdeckende Barriereschicht aufweisen.

Erfindungsgemäß ist die Platte während des Spritzgießens des Ausgießelements als Teil des Grundkörpers von diesem durch einen dünnen Schlitz getrennt. Dann werden Platte und Deckel zu einer festen Verbindung zusammengeführt, beispielsweise flächig verklebt oder an mehreren Stellen ultraschallverschweißt. Dadurch, dass sowohl der Flansch des Grundkörpers als auch die Platte mit einer Barriereschicht versehen sind, behält die mit einem solchen erfindungsgemäßen Ausgießelement versehene Packung ihre guten Barriereeigenschaften. Im Bereich der Gießöffnung werden die geschwächten Eigenschaften der Packung durch das dort applizierte und mit einer Barriereschicht versehene Ausgießelement gewissermaßen 'repariert'.

Zum Applizieren eines solchen Ausgießelementes auf eine Getränkepackung weist diese eine Öffnung auf, deren Form im wesentlichen der Form des Ausgießelements entspricht. Das Ausgießelement wird dann durch die Öffnung der Packung durchgesteckt und mit seinem umlaufenden Flansch am Inneren des Mehrschichtverbundmaterials befestigt.

Zum erstmaligen Öffnen dieses erfindungsgemäßen Ausgießelementes wird der Deckel vom Grundkörper angehoben und dabei die Platte mit der darunter befindlichen, die Gießöffnung der Packung bis zur ersten Öffnung verschließenden Folie aufgrund der flächigen Verbindung konturgenau entfernt. Auf diese Weise wird nicht nur eine definierte Gießöffnung geschaffen, die Öffnung funktioniert auch zuverlässig, ohne dass ein separat zu entsorgendes Wegwerfteil entstünde. Darüber hinaus ist sichergestellt, dass der Deckel auch mit dem herausgerissenen Verbundstück zuverlässig wieder geschlossen werden kann.

Eine sichere Verbindung zwischen Platte und Deckel entsteht dadurch, dass beide Teile verschweißt, vorzugsweise ultraschallverschweißt sind.

Eine weitere Lehre der Erfindung sieht vor, dass der Grundkörper einen umlaufenden, sich im wesentlichen senkrecht zum Flansch erstreckenden Steg aufweist, der den Deckel in geschlossenem Zustand abdichtend aufnimmt, wobei es besonders zweckmäßig ist, dass der Deckel mit dem Grundkörper verrastbar ist. Das Verrasten kann dabei hörbar erfolgen, um dem Verbraucher zu signalisieren, dass die so wieder verschlossene Packung dicht verschlossen ist, um beispielsweise geschüttelt werden zu können.

In weiterer vorteilhafter Ausgestaltung der Erfindung ist vorgesehen, dass zur gelenkigen Verbindung von Grundkörper und Deckel ein Scharnier vorgesehen, welches entweder am Grundkörper oder, alternativ, am Deckel angeordnet sein kann. Eine besonders geringe Bauhöhe wird durch die Verwendung eines Filmscharnieres erreicht.

Nach einer weiteren Ausbildung der Erfindung besteht die Barriereschicht der verwendeten Folie beispielsweise aus einem Ethylenvinylalkohol (EVOH), Polyethylen (PE), Polyamid oder aus Aluminiumfolie bzw. aus einer Mischung der aufgezählten Stoffe.

Nach einer weiteren Lehre der Erfindung kann der Grundkörper und/oder der Deckel ein Originalitätssiegel aufweisen, welches dem Verbraucher signalisiert, wenn eine Packung ggfs. vor ihrem bestimmungsgemäßen Gebrauch unbefugt geöffnet worden ist. Dazu können beispielsweise Grundkörper und Deckel mit einem als Sollbruchstelle ausgebildeten Verbindungssteg ausgebildet sein.

Schließlich können nach einer weiteren vorteilhaften Ausgestaltung der Erfindung der Grundkörper und der Deckel auch einstückig hergestellt sein. In diesem Fall werden beide Teile in einem einzigen Spritzvorgang hergestellt und der sie verbindende Grat vor dem Verbinden von Platte und Deckel entfernt.

Gemäß einem ersten erfindungsgemäßen Herstellungsverfahrens wird der Grundkörper des Ausgießelements mittels einer Wärmequelle aktiviert und mittels einem Anpressstempel mit der Folie verbunden. Dabei kann die Wärmeenergie zwischen Ausgießelement und Folie zugeführt werden, oder ist es alternativ auch denkbar, dass die Wärmeenergie unterhalb der Folie zugeführt wird. Dabei wird die Folie von der Wärmequelle ausgehenden Energie durchstrahlt.

Nach dem Plastifizieren der Siegelflächen werden die Folie und die Unterseite des Grundkörpers miteinander taschenfrei verbunden. Vorzugsweise wird als Folie Rollenware eingesetzt. Das Vereinzeln der Ausgießelemente kann direkt nach dem Verbinden mit der Folie durch Ausstanzung erfolgen, oder aber erst vor der eigentlichen Applikation des Ausgießelementes in der Füllmaschine. Ein wesentlicher Vorteil der letztgenannten Möglichkeit besteht darin, dass auf einen teilweise recht komplexen Sortierprozess der Ausgießelemente vor dem Zuführen zum Applikator vollständig verzichtet werden kann, wenn die Ausgießelemente aus dem Folienstreifen fest positioniert angeordnet sind.

Nach einem alternativen Herstellungsverfahren ist vorgesehen, dass die Folie ein von einer Rolle bereitgestellter Folienstreifen ist und der Folienstreifen durch das Spritzgußwerkzeug für das Ausgießelement gezogen wird, so dass das Ausgießelement taschenfrei auf die Folie gespritzt wird. Dabei verbindet sich der Flansch des Grundkörpers und die darin befindliche Platte mit der Barrierefolie. Auch bei dieser Herstellungsmethode kann das Ausgießelement im Umfeld des Spritzgießwerkzeuges ausgestanzt werden, um als lose Schüttware weiterverarbeitet zu werden, oder aber bis zur Applikation auf dem Folienstreifen verbleiben.

Die Erfindung wird nachfolgend anhand von einer lediglich bevorzugte Ausführungsbeispiele darstellenden Zeichnung näher erläutert. In der Zeichnung zeigen
- Fig. 1: eine Ausführungsform eines erfindungsgemäßen Ausgießelements in geschlossenem Zustand in Draufsicht,
- Fig. 2: das Ausgießelement aus Fig. 1 in perspektivischer Ansicht,
- Fig. 3: das Ausgießelement aus Fig. 1 in einer Ansicht von unten,
- Fig. 4: das Ausgießelement aus Fig. 1 im Längsschnitt,
- Fig. 5: das Ausgießelement aus Fig. 4 im Längsschnitt, jedoch im geöffneten Zustand
- Fig. 6: eine zweite Ausführungsform eines erfindungsgemäßen Ausgießelements im Querschnitt,
- Fig. 7: ein anderes erfindungsgemäßes Ausgießelement mit auf eine Folie aufgebrachtem Grundkörper in schematischer Draufsicht,
- Fig. 8: ein weiteres erfindungsgemäßes Ausgießelement, aufgebracht auf eine Folie, in perspektivischer Ansicht und
- Fig. 9: ein weiteres erfindungsgemäßes Ausgießelement, aufgespritzt auf eine Folie, in perspektivischer Ansicht.

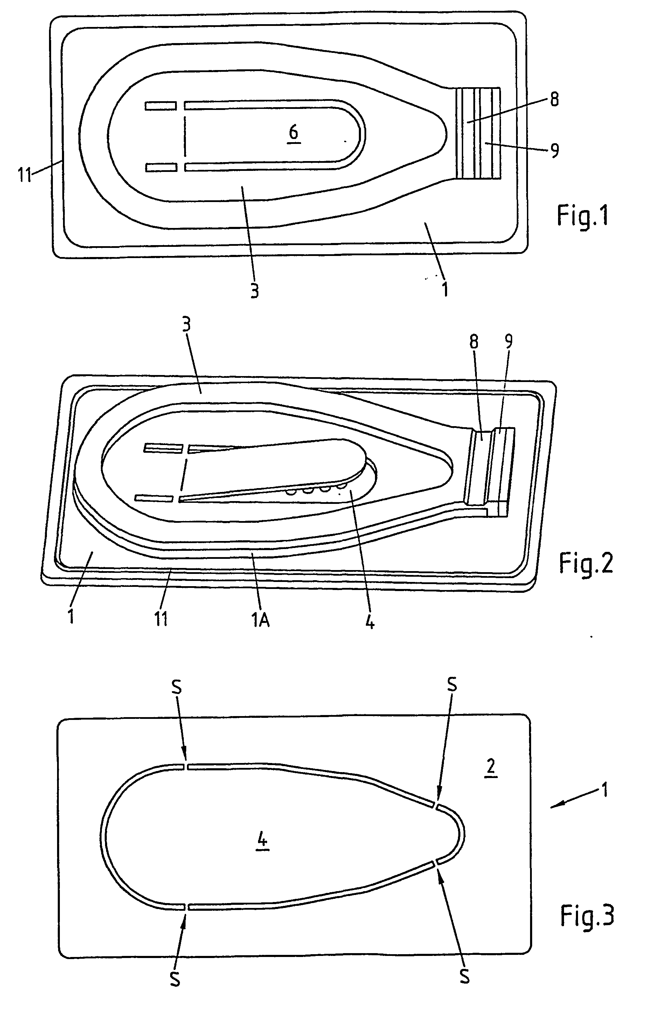

In den Fig. 1 bis 3 ist ein erfindungsgemäßes Ausgießelement zur besseren Erläuterung noch ohne Barriereschicht dargestellt. Das Ausgießelement weist zunächst einen Grundkörper 1 mit einem umlaufenden Flansch 2 und einem mit dem Grundkörper 1 gelenkig verbundenen Deckel 3 auf. Wie insbesondere aus Fig. 3, der Ansicht von unten, erkennbar ist, ist im Inneren des Grundkörpers 1 eine in seiner Größe der späteren Gießöffnung entsprechenden Platte 4 vorgesehen, welche durch im dargestellten und insoweit bevorzugten Ausführungsbeispiel vier Stegen S mit dem umlaufenden Flansch 2 des Grundkörpers verbunden ist. Zur Erleichterung des Öffnungsvorganges weist die Platte 4, wie aus Fig. 2 ersichtlich, eine keilartige Erhöhung 5 auf, um eine Grifflasche 6, welche an der Unterseite ihres freien Endes mit einer nicht näher bezeichneten Riffelung versehen ist, leicht angewinkelt am Deckel 3 zu befestigen.

Wie aus Fig. 3 hervorgeht, ist die Platte 4 von einem Schlitz 7 umgeben, der nur im Bereich der Stege S unterbrochen ist. Da die Platte 4 mit dem Deckel 3 fest verbunden ist, führt ein Öffnen des Deckels 3 mit Hilfe der Grifflasche 6 zu einem Brechen der Stege S und einem Herauslösen der Platte 4 aus dem Grundkörper 1.

Damit der Deckel 3 beim Öffnungsvorgang nicht vollständig vom Grundkörper 1 entfernt wird, ist der in der Darstellung rechte Teil des Deckels 3 mit einem Verbindungselement 9 fest mit dem Grundkörper 1 verbunden. Zwischen Verbindungselement 9 und eigentlichem Deckel 3 ist ein Scharnier 8 angeordnet, welches bevorzugt als Filmscharnier ausgebildet ist.

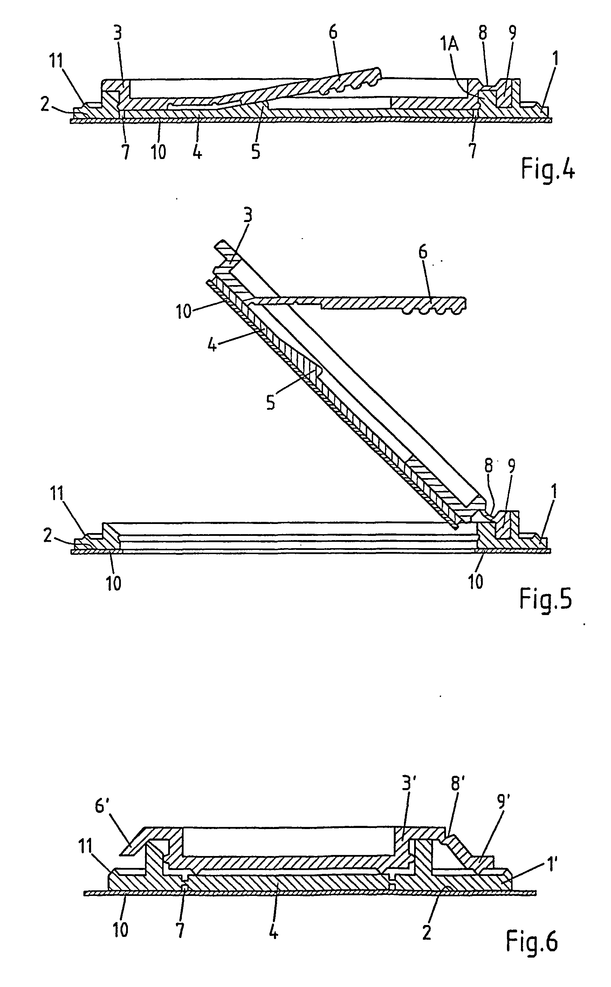

In den Fig. 4 und 5 ist das zuvor näher beschriebene erfindungsgemäße Ausgießelement im Längsschnitt dargestellt, bereits verbunden mit einer auf der Unterseite des Grundkörpers 1 vollflächig angeordneten Barrierefolie 10. Aus Fig. 5 geht deutlich hervor, dass beim erstmaligen Öffnen des Deckels 3 des erfindungsgemäßen Ausgießelementes durch Betätigen der Grifflasche 6 das unterhalb des Deckels 4 mit diesem fest verbundene Folienstück der Barrierefolie 10 konturgenau aus dem Folienverbund herausgerissen ist.

In Fig. 6 ist eine alternative Ausgestaltung dargestellt, vor der Ultraschallschweissverbindung von Deckel 3' mit dem Grundkörper 1' nicht näher bezeichnete Energierichtungsgeber zwischen Deckel 3' und Platte 4 und Verbindungselement 9' und Grundkörper 1' sorgen für eine sichere Verbindung beim Verschweißen.

Aus den Fig. 1, und 4 bis 6 geht ferner hervor, dass oberhalb des umlaufenden Flansches 2 ein umlaufender Energierichtungsgeber 11 vorgesehen ist, damit beim Applizieren des Ausgießelementes, welches von unten durch eine Öffnung der nicht dargestellten Mehrschichtverbundpackung gesteckt wird, zu einer dichten Einheit ermöglicht wird.

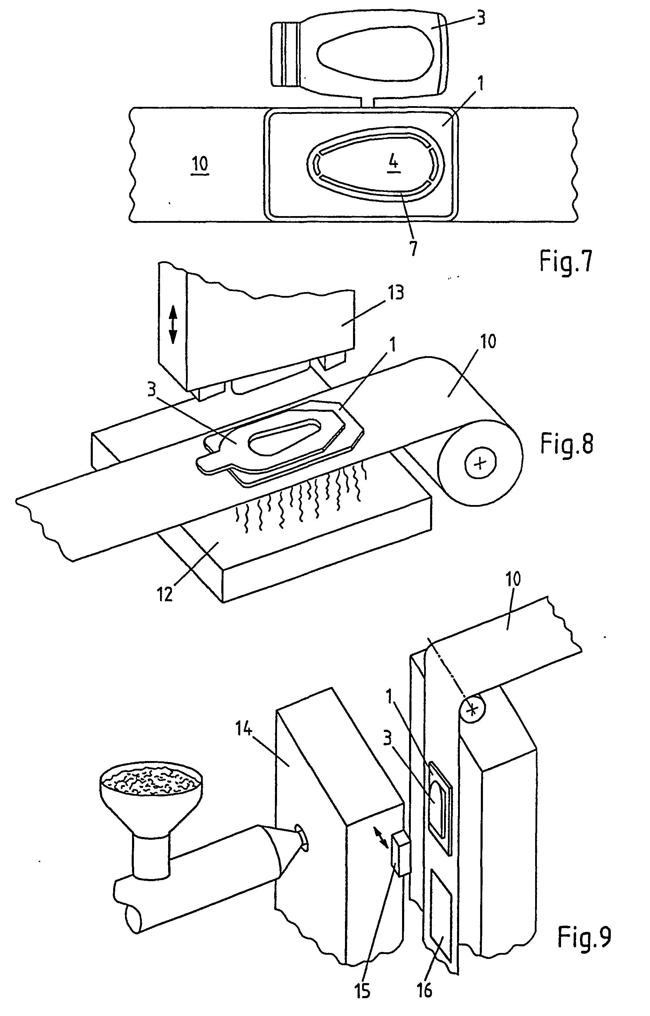

Fig. 7 zeigt prinzipiell noch einmal ein einstückig hergestelltes Ausgießelement, bei dem der Deckel 3 mit dem Grundkörper 1 über einen nicht näher bezeichneten Steg miteinander verbunden sind, der vor dem Zusammenführen von Deckel 3 und Platte 4 entfernt werden muss. Gleichzeitig dargestellt ist ein Streifen einer Folie 10, wobei die Verbindung von Grundkörper 1, Deckel 3 und Folie 10 in einem einzigen Arbeitsschritt erfolgen kann. Dies ist in Fig. 8 dargestellt, wo die streifenförmige Folie 10 als Rollenware dargestellt ist, und die Verbindung der von einer Wärmequelle 12 aktivierten Teile mittels einem Pressstempel 13 erfolgt.

Schließlich ist in Fig. 9 dargestellt, dass es auch möglich ist, den Streifen der Barrierefolie 10 durch ein geöffnetes Spritzgießwerkzeug 14, das nur schematisch dargestellt ist, hindurchzuziehen. Ein entsprechender Schieber 15 im Inneren des Spritzgießwerkzeugs 14 sorgt dafür, dass die Hinterschneidungen des Ausgießelementes vor dem Öffnen der Form freigegeben werden. Hierbei ist es auch möglich, die Bewegung zum Öffnen und Schließen des Spritzgießwerkzeuges 14 gleichzeitig zum Ausstanzen des auf die Barrierefolie 10 gespritzten Ausgießelementes zu verwenden, wie mit der ausgestanzten Fläche 16 angedeutet sein soll.

## Patentansprüche

1. Wiederverschließbares Ausgießelement zum Öffnen und Wiederverschließen von Packungen, insbesondere quaderförmigen Mehrschichtverbundpackungen, mit einem einen umlaufenden Flansch (2) aufweisenden Grundkörper (1) und einem mit diesem gelenkig verbundenen Deckel (3),
**dadurch gekennzeichnet, dass** der Grundkörper (1) im Bereich seiner Gießöffnung eine Platte (4) aufweist, deren Kontur im wesentlichen der Kontur der Gießöffnung entspricht, die durch wenigstens einen Schlitz (7) vom Flansch (2) beabstandet angeordnet ist und deren Unterseite bündig mit der Unterseite des Flansches (2) verläuft, dass der Deckel (3) mit der Platte (4) fest verbunden ist, so dass der Deckel (3) gleichzeitig als Öffnungselement dient und dass sowohl der Flansch (2) als auch die Platte (4) eine sich parallel zur Flanschebene erstreckende, den Schlitz (7) überdeckende Folie (10) mit einer Barriereschicht aufweisen.

2. Ausgießelement nach Anspruch 1,
**dadurch gekennzeichnet, dass** die Platte (4) mit dem Deckel (3) verschweißt, vorzugsweise ultraschallverschweißt ist.

3. Ausgießelement nach Anspruch 2,
**dadurch gekennzeichnet, dass** der Grundkörper (1) einen um die Gießöffnung umlaufenden, sich im wesentlichen senkrecht zum Flansch (2) erstreckenden Steg (1A) aufweist, der den Deckel (3) in geschlossenem Zustand abdichtend aufnimmt.

4. Ausgießelement nach Anspruch 3,
**dadurch gekennzeichnet, dass** der Deckel (3) mit dem Grundkörper (1) verrastbar ist.

5. Ausgießelement nach einem der Ansprüche 1 bis 4,
**dadurch gekennzeichnet, dass** zur gelenkigen Verbindung von Grundkörper (1) und Deckel (3) ein Scharnier (8) vorgesehen ist und dass das Scharnier (8) im Deckel (3) angeordnet ist.

6. Ausgießelement nach einem der Ansprüche 1 bis 4,
**dadurch gekennzeichnet, dass** zur gelenkigen Verbindung von Grundkörper (1') und Deckel (3') ein Scharnier (8') vorgesehen ist und dass das Scharnier (8') am Grundkörper (1') angeordnet ist.

7. Ausgießelement nach Anspruch 5 oder 6,
**dadurch gekennzeichnet, dass** das Scharnier (8, 8') als Filmscharnier ausgebildet ist.

8. Ausgießelement nach einem der Ansprüche 1 bis 7,
**dadurch gekennzeichnet, dass** die Barriereschicht der Folie (10) aus einem Ethylenvinylalkohol (EVOH) besteht.

9. Ausgießelement nach einem der Ansprüche 1 bis 7,
**dadurch gekennzeichnet, dass** die Barriereschicht (10) eine Aluminiumfolie ist.

10. Ausgießelement nach einem der Ansprüche 1 bis 7,
**dadurch gekennzeichnet, dass** die Barriereschicht (10) eine Folie aus Polyethylen (PE) ist.

11. Ausgießelement nach einem der Ansprüche 1 bis 7,
**dadurch gekennzeichnet, dass** die Barriereschicht (10) der Folie aus Polyamid (PA) besteht.

12. Ausgießelement nach einem der Ansprüche 1 bis 11,
**dadurch gekennzeichnet, dass** die Barriereschicht der Folie(10) aus einer Mischung der in den Ansprüchen 8 bis 11 genannten Stoffe besteht.

13. Ausgießelement nach einem der Ansprüche 8 bis 12,
**dadurch gekennzeichnet, dass** die für die Barriereschicht vorgesehene Folie (10) als Rollenware eingesetzt wird.

14. Ausgießelement nach einem der Ansprüche 1 bis 13,
**dadurch gekennzeichnet, dass** der Grundkörper und/oder der Deckel ein Originalitätssiegel aufweisen.

15. Ausgießelement nach einem der Ansprüche 1 bis 14,
**dadurch gekennzeichnet, dass** der Grundkörper (1) und der Deckel (3) einstückig hergestellt sind.

16. Verfahren zum Herstellen eines Ausgießelements nach einem der Ansprüche 1 bis 15,
**dadurch gekennzeichnet, dass** der Grundkörper (1) des Ausgießelements mittels einer Wärmequelle (12) aktiviert und mittels einem Anpressstempel (13) mit der Folie (10) verbunden wird.

17. Verfahren nach Anspruch 16,
**dadurch gekennzeichnet, dass** die Wärmeenergie zwischen Ausgießelement und Folie (10) zugeführt wird.

18. Verfahren nach Anspruch 16,
**dadurch gekennzeichnet, dass** die Wärmeenergie unterhalb der Folie (10) zugeführt wird.

19. Verfahren zum Herstellen eines Ausgießelements nach einem der Ansprüche 1 bis 15,
**dadurch gekennzeichnet, dass** die Folie (10) ein von einer Rolle bereitgestellter Folienstreifen (11) ist und der Folienstreifen (11) durch das Spritzgusswerkzeug (14) für das Ausgießelement gezogen wird, so dass der umlaufende Flansch (2) und die Platte (4) des Ausgießelements taschenfrei auf die Folie (11) gespritzt wird.

20. Verfahren nach einem der Ansprüche 16 bis 19,
**dadurch gekennzeichnet, dass** die Ausgießelemente auf einem Folienstreifen (11) aus Barrierematerial verbleiben und erst vor ihrer eigentlichen Applikation in der Füllmaschine vereinzelt werden.

21. Packung, insbesondere quaderförmige Mehrschichtverbundpackung, mit einem Ausgießelement gemäß einem der Ansprüche 1 bis 15
**dadurch gekennzeichnet, dass** sie eine Öffnung aufweist, deren Form im wesentlichen der Form des Deckels (3) entspricht und dass das Ausgießelement mit seinem umlaufenden Flansch (2) am Inneren des Mehrschichtverbundmaterials befestigt ist.

## Claims

1. A reclosable pouring element for opening and reclosing packages, in particular cuboid multilayer composite packages, comprising a base body (1) having a circumferential flange (2), and a cover (3) hingeably connected to said base body (1),
**characterised in that**
the base body (1) in the region of its pouring aperture comprises a plate (4) whose contour essentially corresponds to the contour of the pouring aperture, which is arranged to be spaced apart from the flange (2) by at least one slot (7), and whose underside extends flush with the underside of the flange (2), **in that** the cover (3) is firmly attached to the plate (4) so that the cover (3) at the same time serves as an opening element, and **in that** both the flange (2) and the plate (4) comprise a film (10) which extends parallel to the flange plane and covers the slot (7), which film (10) comprises a barrier layer.

2. The pouring element according to claim 1,
**characterised in that**
the plate (4) is welded to the cover (3), preferably ultrasound-welded.

3. The pouring element according to claim 2,
**characterised in that**
the base body (1) comprises a stay (1A) which is arranged so as to be circumferential to the pouring aperture and extends essentially perpendicular to the flange (2), wherein said stay (1A) accommodates the cover (3) in the closed state so as to provide a tight seal.

4. The pouring element according to claim 3,
**characterised in that**
the cover (3) can be clipped to the base body (1).

5. The pouring element according to any one of claims 1 to 4,
**characterised in that**
for articulated connection between the base body (1) and the cover (3) a hinge (8) is provided, and **in that** the hinge (8) is arranged in the cover (3).

6. The pouring element according to any one of claims 1 to 4,
**characterised in that**
for articulated connection between the base body (1') and the cover (3') a hinge (8') is provided, and **in that** the hinge (8') is arranged on the base body (1').

7. The pouring element according to claim 5 or 6,
**characterised in that**
the hinge (8, 8') is a film hinge.

8. The pouring element according to any one of claims 1 to 7,
**characterised in that**
the barrier layer of the film (10) comprises an ethylene vinyl alcohol (EVOH).

9. The pouring element according to any one of claims 1 to 7,
**characterised in that**
the barrier layer (10) is an aluminium foil.

10. The pouring element according to any one of claims 1 to 7,
**characterised in that**
the barrier layer (10) is a film of polyethylene (PE).

11. The pouring element according to any one of claims 1 to 7,
**characterised in that**
the barrier layer (10) of the film or foil comprises polyamide (PA).

12. The pouring element according to any one of claims 1 to 11,
**characterised in that**
the barrier layer (10) of the film or foil comprises a mixture of the materials mentioned in claims 8 to 11.

13. The pouring element according to any one of claims 8 to 12,
**characterised in that**
the film or foil (10) provided for the barrier layer is supplied on rolls.

14. The pouring element according to any one of claims 1 to 13,
**characterised in that**
the base body and/or the cover comprise/comprises an originality seal.

15. The pouring element according to any one of claims 1 to 14,
**characterised in that**
the base body (1) and the cover (3) are made in one piece.

16. A method for producing a pouring element according to any one of claims 1 to 15,
**characterised in that**
the base body (1) of the pouring element is activated by means of a heat source (12) and is connected to the film or foil (10) by means of a press-on stamp (13).

17. The method according to claim 16,
**characterised in that**
the heat energy is supplied between the pouring element and the film or foil (10).

18. The method according to claim 16,
**characterised in that**
the heat energy is supplied underneath the film or foil (10).

19. A method for producing a pouring element according to any one of claims 1 to 15,
**characterised in that**
the film or foil (10) is a film or foil strip (11) provided from a roll, and **in that** the film or foil strip (11) is pulled through the injection mould (14) for the pouring element so that the circumferential flange (2) and the plate (4) of the pouring element are moulded onto the film or foil (11) without there being any pockets.

20. The method according to any one of claims 16 to 19,
**characterised in that**
the pouring elements remain on a film or foil strip (11) of barrier material and are singled out in the filling machine only prior to their actual application.

21. A package, in particular a cuboid multilayer composite package with a pouring element according to any one of claims 1 to 15,
**characterised in that**
it comprises an aperture whose shape essentially corresponds to the shape of the cover (3), and **in that** the circumferential flange (2) of the pouring element is attached to the interior of the multilayer composite material.

## Revendications

1. Élément verseur refermable destiné à ouvrir et refermer des emballages, en particulier des emballages composites multicouches de forme parallélépipédique, comprenant un corps de base (1) doté d'une collerette périphérique (2) et d'un couvercle (3) relié de façon articulée au corps de base,
**caractérisé en ce que** le corps de base (1) comporte dans la région de son ouverture de versement une plaque (4) dont le contour correspond sensiblement au contour de l'ouverture de versement qui est espacée de la collerette (2) par au moins une fente (7) et dont le côté inférieur s'étend à fleur avec le côté inférieur de la collerette (2),
le couvercle (3) est relié solidement à la plaque (4) de sorte que le couvercle (3) sert en même temps d'élément d'ouverture, et
aussi bien la collerette (2) que la plaque (4) comporte une feuille (10) qui est dotée d'une couche formant barrière et qui s'étend parallèlement au plan de la collerette et recouvre la fente (7).

2. Élément verseur selon la revendication 1, **caractérisé en ce que** la plaque (4) est soudée au couvercle (3), avantageusement par ultrasons.

3. Élément verseur selon la revendication 2, **caractérisé en ce que** le corps de base (1) comporte une nervure (1A) courant autour de l'ouverture de versement, laquelle nervure s'étend sensiblement perpendiculairement à la collerette (2) et reçoit de façon étanche le couvercle (3) à l'état fermé.

4. Élément verseur selon la revendication 3, **caractérisé en ce que** le couvercle (3) peut être encliqueté avec le corps de base (1).

5. Élément verseur selon l'une des revendications 1 à 4, **caractérisé en ce qu'**il est prévu une charnière (8) pour la liaison articulée du corps de base (1) et du couvercle (3) et **en ce que** la charnière (8) est placée dans le couvercle (3).

6. Élément verseur selon l'une des revendications 1 à 4, **caractérisé en ce qu'**il est prévu une charnière (8') pour la liaison articulée du corps de base (1') et du couvercle (3') et **en ce que** la charnière (8') est placée sur le corps de base (1').

7. Élément verseur selon la revendication 5 ou 6, **caractérisé en ce que** la charnière (8, 8') est conformée en charnière à film.

8. Élément verseur selon l'une des revendications 1 à 7, **caractérisé en ce que** la couche formant barrière de la feuille (10) est en alcool d'éthylène-vinyle.

9. Élément verseur selon l'une des revendications 1 à 7, **caractérisé en ce que** la couche formant barrière (10) est une feuille d'aluminium.

10. Élément verseur selon l'une des revendications 1 à 7, **caractérisé en ce que** la couche formant barrière (10) est une feuille de polyéthylène (PE).

11. Élément verseur selon l'une des revendications 1 à 7, **caractérisé en ce que** la couche formant barrière (10) de la feuille est en polyamide (PA).

12. Élément verseur selon l'une des revendications 1 à 11, **caractérisé en ce que** la couche formant barrière de la feuille (10) est un mélange des matières mentionnées dans les revendications 8 à 11.

13. Élément verseur selon l'une des revendications 8 à 12, **caractérisé en ce que** la feuille (10) prévue pour la couche formant barrière est utilisée sous la forme de rouleau.

14. Élément verseur selon l'une des revendications 1 à 13, **caractérisé en ce que** le corps de base et/ou le couvercle comporte un cachet d'authenticité.

15. Élément verseur selon l'une des revendications 1 à 14, **caractérisé en ce que** le corps de base (1) et le couvercle (3) sont fabriqués d'une seule pièce.

16. Procédé de fabrication d'un élément verseur selon l'une des revendications 1 à 15, **caractérisé en ce que** le corps de base (1) de l'élément verseur est activé au moyen d'une source de chaleur (12) et est relié à la feuille (10) au moyen d'un poinçon de pressage (13).

17. Procédé selon la revendication 16, **caractérisé en ce que** l'énergie thermique est amenée entre l'élément verseur et la feuille (10).

18. Procédé selon la revendication 16, **caractérisé en ce que** l'énergie thermique est amenée sous la feuille (10).

19. Procédé de fabrication d'un élément verseur selon l'une des revendications 1 à 15, **caractérisé en ce que** la feuille (10) est une bande de feuille (11) délivrée par un rouleau et la bande de feuille (11) est tirée par l'outil (14) de moulage par injection de l'élément verseur de sorte que la collerette périphérique (2) et la plaque (4) de l'élément verseur est moulé par injection sans poches sur la feuille (11).

20. Procédé selon l'une des revendications 16 à 19, **caractérisé en ce que** les éléments verseurs restent sur une bande de feuille (11) en matériau formant barrière et ne sont séparés qu'avant leur application proprement dite dans la machine de remplissage.

21. Emballage, en particulier emballage composite multicouche parallélépipédique, comprenant un élément verseur selon l'une des revendications 1 à 15, **caractérisé en ce qu'**il comporte une ouverture dont la forme correspond sensiblement à la forme du couvercle (3) et **en ce que** l'élément verseur est fixé avec sa collerette périphérique (2) à l'intérieur du matériau composite multicouche.
